# FASCICULE DE BREVET EUROPEEN

(11) **EP 2 456 803 B1**
(45) Date de publication et mention de la délivrance du brevet: **22.01.2014**
(21) Numéro de dépôt: 10751989.4
(22) Date de dépôt: 09.07.2010
(51) Int. Cl.: C08G 18/71, C08G 65/336, C09J 133/08, C09J 171/02, C09J 175/04, C09J 201/10

(54) **COLLE DE RÉPARATION OU DE FIXATION SANS ORGANOÉTAIN**
ORGANOTINFREIER LEIM FÜR REPARATUREN UND BEFESTIGUNGEN
GLUE FOR REPAIR OR ATTACHMENT FREE OF ORGANOTIN

(30) Priorité: 20.07.2009 FR 0903551
(43) Date de publication de la demande: 30.05.2012
(73) Titulaire: Bostik SA, 92400 Courbevoie (FR)
(72) Inventeur: CARRARD, Jacqueline, F-77170 Brie Comte Robert (FR); CAGAN, Virginie, F-77140 Montcourt Fromonville (FR)
(74) Mandataire: Granet, Pierre
(86) Numéro de dépôt international: PCT/FR2010/051455
(87) Numéro de publication internationale: WO 2011/010044

(56) Documents cités:
- EP-A1- 1 445 283
- EP-A1- 1 746 133
- WO-A1-2007/093381

## Description

La présente invention a pour objet une composition adhésive comprenant un polymère à groupement terminal silyl réticulable à l'humidité, qui présente une innocuité et une vitesse de prise améliorées, tout en offrant de bonnes performances de collage. Elle concerne également son utilisation comme colle de réparation ou de fixation.

On connaît bien des compositions adhésives à base de polymère à groupement terminal silyl. De telles compositions sont couramment disponibles dans le commerce et appréciées par les utilisateurs, notamment comme colles de réparation ou de fixation qui ne renferment pas de solvant.

Lors de l'opération de collage entre deux substrats, ledit polymère réagit, à température ambiante, avec l'humidité de l'air environnant par l'intermédiaire du groupement silyl qui comprend au moins un groupe hydrolysable lié à l'atome de silicium. Cette réaction conduit à la réticulation des chaînes polymériques au moyen de liaisons siloxanes, et à la création d'un réseau tridimensionnel formant un joint adhésif qui solidarise les 2 substrats.

La formation effective d'un tel joint et le temps correspondant nécessitent pratiquement la présence dans ladite composition adhésive d'un catalyseur de réticulation. Des organoétains sont souvent utilisés à cette fin dans les colles de réparation ou de fixation du commerce tels que, par exemple, le dibutyl dilaurate d'étain, le dibutyl diacetylacétonate d'étain ou le dioctyl diacetylacétonate d'étain. Toutefois depuis quelques années, est apparu le souci d'une possible accumulation de tels composés dans l'écosystème conduisant à un risque pour la santé publique.

Il est donc souhaitable, en raison de ce risque de toxicité, d'éviter ou de réduire la présence des organoétains dans les compositions adhésives comprenant un polymère à groupement terminal silyl.

La demande de brevet européen EP 1746134 décrit une composition réticulable comprenant un polymère organique contenant un groupe réactif à base de silicium, dans laquelle on utilise comme catalyseur de réticulation un ou plusieurs composés à base de titane, d'aluminium et/ou de zirconium. Cependant les compositions spécifiquement divulguées par cette demande font apparaître un temps de formation de peau, correspondant à un temps de réticulation du polymère et donc à un temps de prise de la composition adhésive, très important et plus précisément supérieur ou égal à une heure.

Les colles de réparation sont très utilisées par les particuliers pour le collage de divers objets cassés ou décollés constitués de toutes sortes de matériaux tels que le bois et ses dérivés, les plastiques rigides et souples, le cuir, le caoutchouc, le marbre, la pierre, les tissus, la céramique, la faïence, le verre, le métal et le carrelage.

Les colles de fixation sont également couramment utilisées par les consommateurs dans leurs travaux de bricolage pour fixer les objets les plus divers sur les sols, murs ou plafonds et éviter ainsi le recours aux systèmes mécaniques de fixation traditionnels à base par exemple de clous, vis et/ou chevilles. Comme exemples d'objets pouvant être fixés, on peut citer les plinthes, les lambris, les tasseaux, les spots pour éclairage, les crochets, les miroirs, les patères ou porte-manteaux de formes diverses, les supports pour tringle à rideau et même les supports pour étagères destinées au rangement de vaisselle, ustensiles de cuisine ou livres. La nature du substrat sur lequel l'objet peut être fixé est elle-même très variée ; on peut citer notamment les carreaux de plâtre ou de céramique, le béton, le fibrociment, ou encore le bois.

Pour ces applications comme colles de réparation ou de fixation, il est très important de disposer d'une composition adhésive qui assure, dès la mise en contact des objets à assembler après encollage, leur maintien immédiat grâce à un temps de prise très court, évitant leur maintien à la main ou encore la pose d'un serre-joint ou d'étais. La composition adhésive ainsi mise en oeuvre doit de plus assurer une cohésion satisfaisante du joint adhésif obtenu, garante de la solidité de l'assemblage obtenu.

La présente invention a donc pour but de proposer une composition adhésive comprenant un polymère à groupement terminal silyl réticulable à l'humidité, qui utilise comme catalyseur de réticulation un composé autre qu'un organoétain, tout en offrant un temps de prise amélioré, ainsi que la cohésion requise pour une utilisation comme colle de réparation ou de fixation.

Il a à présent été trouvé que ce but peut être atteint en totalité ou en partie au moyen de la composition adhésive décrite ci-après.

La présente invention a donc pour objet une composition adhésive comprenant :
- de 10 à 95 % d'un polymère (A) réticulable à l'humidité dont la chaîne principale comprend 2 groupements terminaux silyl, chacun comprenant au moins un groupe hydrolysable lié à l'atome de silicium ;
- de 1 à 60 % d'une charge minérale (B) sous la forme de particules de taille comprise entre 1 nm et 0,2 mm, de préférence entre 10 nm et 0,01 mm ; et
- de 0,2 à 7 % d'un catalyseur de réticulation (C) constitué du tétraisopropoxyde de titane.

Il a en effet été trouvé que l'incorporation de ce composé spécifique du titane (C) conduit, à la différence d'autres composés du titane, à une composition adhésive ayant un temps de formation de peau amélioré, qui est en général avantageusement inférieur à une heure, de préférence inférieur à 30 minutes, et encore plus préférentiellement inférieur à 15 minutes. Cette composition offre de plus une cohésion du joint adhésif convenant à son utilisation comme colle de réparation ou de fixation.

Dans le présent texte, et en l'absence d'indications contraires, les pourcentages utilisés pour représenter les quantités d'ingrédients de la composition objet de l'invention correspondent à des pourcentages poids/poids. De plus, lorsque qu'il est indiqué que la composition comprend une certaine quantité d' "un" composant (A) ou (B), l'article "un" signifie que "un ou plusieurs" composants (A) et/ou (B) peuvent être inclus dans ladite composition.

La chaîne principale du polymère (A) est généralement choisie parmi les chaînes polymériques suivantes :
- (A1) les polyoxyalkylènes (ou polyéthers), comme par exemple les polyoxyéthylènes et polyoxypropylènes ;
- (A2) les polyuréthanes ou polyurées obtenus par condensation d'un polyol (notamment de type polyéther et/ou polyester) ou d'une polyamine, avec des polyisocyanates;
- (A3) les homopolymères et copolymères obtenus à partir :
   - d'au moins un monomère de type alkyl (méth)acrylate comprenant un radical alkyle ayant un nombre d'atomes de carbone compris entre 1 et 15, de préférence entre 1 et 10 ; et éventuellement
   - d'autres monomères, comme les dérivés styréniques, les éthers vinyliques, les acides (méth)acryliques ou d'autres dérivés polyinsaturés, ces autres monomères pouvant être utilisés jusqu'à des teneurs de 50% en poids par rapport à l'ensemble des monomères.

La chaîne principale du polymère (A) est reliée par chacune de ses 2 extrémités à un groupement silyl comprenant au moins un groupe hydrolysable lié à l'atome de silicium.

Ledit groupement silyl est de préférence un radical alkoxysilane ayant pour formule:

- Si (R¹)ₚ(OR²)₃₋ₚ (I)

dans laquelle :
- R¹ et R², identiques ou différents, représentent chacun un radical alkyle linéaire ou ramifié de 1 à 4 atomes de carbone, avec la possibilité lorsqu'il y a plusieurs radicaux R¹ ou R² que ceux-ci soient identiques ou différents ;
- p est un nombre entier égal à 0, 1 ou 2.

Lorsque la chaîne principale du polymère (A) est (A1), le radical alkoxysilane peut être relié à celle-ci directement par sa liaison disponible ou bien indirectement par l'intermédiaire d'une fonction uréthane et d'un groupe comprenant un radical hydrocarboné divalent, de préférence un radical alkylène comme par exemple les radicaux de formule :

-CH₂- ou -CH₂-CH₂-CH₂-.

De préférence, le radical alkoxysilane est choisi parmi les radicaux de formule suivante :

-Si(OCH₃)₃, -Si(CH₃)(OCH₃)₂, -Si(OCH₂CH₃)₃, -Si(CH₃)(OCH₂CH₃)₂.

La préparation du polymère (A) est connue de l'homme du métier. Elle est par exemple décrite, selon la nature de la chaîne principale, par les brevets suivants :
- lorsque la chaîne principale est (A1) : US 3971751, US 4323488, EP 1038901 ;
- lorsque la chaîne principale est (A2) : US 3632557, US 3979344, US 5298572, WO 93/05089, EP 770633, EP 1178069
- lorsque la chaîne principale est (A3) : US 4593068, US 4910255, US 6441101, EP 1153942.

De plus, ces polymères (A) sont couramment disponibles dans le commerce. On peut ainsi citer dans le cas d'une chaîne principale (A1) :
- le GENIOSIL^{®} STP-E 10 commercialisé par la société Wacker dont chacun des 2 groupes silyl terminaux a pour formule : -Si(CH₃)(OCH₃)₂ et est relié par l'intermédiaire du groupe : -O-CO-NH-CH₂- à une extrémité de la chaîne principale ;
- le DESMOSEAL^{®} S XP 2636 commercialisé par la société Bayer MaterialScience;
- le KANEKA Silyl^{®} MAX 602 commercialisé par la société Kaneka qui est une composition comprenant environ 55 % de polymère (A) ayant pour chaîne principale (A1) et environ 45 % d'un copolymère acrylique comprenant un monomère acrylique ayant un groupe pendant comprenant un radical silyl.

On peut également citer dans le cas d'une chaîne principale (A2) :
- le STPU100 commercialisé par la société Wacker.

Selon une variante préférée, on met en oeuvre dans la composition selon l'invention un polymère (A) ayant pour chaîne principale (A1).

Selon une autre variante préférée, on met en oeuvre dans la composition selon l'invention un polymère (A) ayant pour chaîne principale (A2).

La charge minérale (B) mise en oeuvre dans la composition adhésive selon l'invention a pour fonction de renforcer le joint adhésif obtenu après réticulation et est choisie par exemple parmi le carbonate de calcium, le carbonate de magnésium, l'oxyde de calcium, l'acide silicique anhydre ou hydraté, la silice, notamment pyrogénée, le silicate de calcium, l'oxyde de titane, l'argile, le talc, le noir de carbone.

Une charge minérale choisie parmi le carbonate de calcium ou une silice pyrogénée est préférée.

Le tétraisopropoxyde de titane (C) est désigné également par le nom de tétra isopropyl titanate ou encore par le sigle TIPT et a pour formule : Ti[O-CH(CH₃)₂]₄. Il est utilisé dans la composition adhésive selon l'invention comme catalyseur de réticulation du polymère (A) et est couramment disponible dans le commerce, par exemple auprès des sociétés Aldrich ou Borica.

Selon une variante préférée, la composition adhésive selon l'invention comprend de 15 à 80 % du polymère (A), de 2 à 55 % de charge minérale et de 0,5 à 5 % de tétraisopropoxyde de titane (C).

La composition adhésive selon l'invention peut en outre comprendre divers additifs tels que :
- jusqu'à 30 % d'un plastifiant choisi par exemple parmi les phtalates ou les huiles minérales d'origine pétrolière ;
- jusqu'à 15 % d'un agent promoteur d'adhérence qui peut être le 3-aminopropyltriméthoxysilane (ou AMMO) ou bien un oligomère de poids moléculaire compris entre 500 et 5000 Da susceptible d'être obtenu par oligomérisation d'un dérivé vinylique d'un alkoxy alkyl silane, comme par exemple le DYNASILAN^{®} 6490 qui est un oligomère de vinyltriméthoxysilane commercialisé par la société Degussa, ayant pour masse molaire environ 900 Da ;
- jusqu'à 5 % d'un agent dessicant consistant de préférence en un dérivé alkoxysilane hydrolysable, et encore plus préférentiellement en un dérivé de triméthoxysilane. Un tel agent prolonge avantageusement la durée de conservation de la composition selon l'invention durant le stockage et le transport, avant son utilisation ; on peut citer par exemple le vinyltriméthoxysilane disponible sous la dénomination commerciale DYNASYLAN^{®} VTMO auprès de la société Degussa ;
- jusqu'à 30 % d'un polymère autre que (A), par exemple un polymère acrylique ou un copolymère acrylique comprenant un monomère acrylique ayant un groupe pendant comprenant un radical silyl ;
- des stabilisants UV et des agents épaississants.

La composition adhésive selon l'invention est avantageusement exempte de quantités significatives d'organoétain, résultant du fait que le catalyseur de réticulation (C) n'est lui-même pas de ce type. Toutefois, elle est susceptible de contenir de tels composés éventuellement utilisés dans la fabrication industrielle des polymères (A). Une telle quantité de composés organoétains dans la composition adhésive selon l'invention est toutefois inférieure à 0,01 %, de préférence inférieure à 0,005 %.

La composition adhésive selon l'invention est préparée par simple mélange de ses ingrédients.

La présente invention concerne également l'utilisation de la composition adhésive telle que définie précédemment comme colle de réparation ou de fixation.

Les exemples suivants sont donnés à titre purement illustratif de l'invention et ne sauraient être interprétés pour en limiter la portée.

### Exemple 1 :

La composition adhésive figurant dans le tableau suivant est préparée par simple mélange des ingrédients indiqués.

Son temps de prise et la cohésion du joint adhésif obtenu après sa réticulation sont évalués par la mesure respectivement du temps de formation de peau et de la résistance au cisaillement, conformément aux tests décrits ci-après.

### Temps de formation de peau :

Ce test est réalisé en atmosphère contrôlée à une température de 20°C et une humidité relative d'environ 60%.

On applique la composition adhésive à l'aide d'une spatule en bois et sous la forme d'un film mince d'épaisseur environ 0,5 mm, sur une lame de verre de longueur 76 mm et de largeur 26 mm.

Sitôt après l'application dudit film, un chronomètre est mis en route et l'on examine toutes les minutes à l'aide d'un léger appui du doigt si le film est sec ou si un résidu de composition adhésive est transféré sur le doigt.

Le temps de formation de peau est le temps au bout duquel le film de composition adhésive est sec et il n'y a plus aucun transfert de résidu de colle sur le doigt.

Le résultat est indiqué en minutes dans le tableau suivant.

### Résistance au cisaillement du joint adhésif selon la norme EN 1465 :

On mesure la contrainte de cisaillement entraînant la rupture du joint adhésif.

Le principe de cette mesure consiste à :
- solliciter dans une machine de traction, dont la mâchoire mobile se déplace à vitesse constante, une éprouvette de forme standard constituée de la composition adhésive réticulée entre 2 supports rigides en polycarbonate que l'on a laissée placée durant 7 jours après sa préparation à température ambiante et dans une atmosphère à 65 % d'humidité relative, puis
- enregistrer la contrainte appliquée au moment où se produit la rupture de l'éprouvette.

Le résultat est indiqué en daN/cm² dans le tableau suivant.

### Exemples 2 à 5 :

On répète l'exemple 1 en préparant les compositions figurant dans le tableau, qui indique également les résultats correspondants obtenus pour le temps de formation de peau et la résistance au cisaillement.

Dans l'exemple 4, les 5% de KANEKA Silyl^{®} MAX 602 comprennent environ 3 % de polymère (A) réticulable à l'humidité ayant pour chaîne principale (A1).

### Exemple comparatif :

On répète l'exemple 2 en préparant la composition du tableau, obtenue en remplaçant le TIPT par la même quantité de diisopropoxyde bis(éthylacétoacétate) de titane. Ce dernier composé est par exemple disponible auprès de la société Aldrich sous la dénomination diisopropoxyde bis(éthylacétoacétate) de titane ou auprès de la société MATSUMOTO sous la dénomination Orgatix^{®} TC-750.

Le temps de formation de peau est doublé par rapport à l'exemple 2.

| Ingrédients | Teneur en % | | | | | |
|---|---|---|---|---|---|---|
| | Exemple 1 | Exemple 2 | Exemple 3 | Exemple 4 | Exemple 5 | Exemple comparatif |
| (A1) GENIOSIL^{®} STP-E 10 | 20 | 95 | - | - | - | 95 |
| (A1) DESMOSEAL^{®} S XP 2636 | - | - | 75 | 18 | - | - |
| (A1) KANEKA Silyl^{®} MAX 602 | - | - | - | 5 | - | - |
| (A2) STPU100 | - | - | - | - | 93 | - |
| (B) Carbonate de calcium | 30 | - | - | 53,9 | - | - |
| (B) Silice pyrogénée | 15 | 2 | 10 | - | 2 | 2 |
| (C) TIPT | 0,5 | 2 | 5 | 1,1 | 2 | - |
| Orgatix^{®} TC-750 | - | - | - | - | - | 2 |
| Phtalate | 28,5 | - | - | 20 | - | - |
| DYNASILAN^{®} 6490 | 5 | - | 10 | - | - | - |
| AMMO | - | - | - | 0,5 | 2 | - |
| DYNASYLAN^{®} VTMO | 1 | 1 | - | 1,5 | 1 | 1 |
| Temps de formation de peau (en minutes) | 25 | 6 | 5 | 20 | 10 | 12 |
| Résistance au cisaillement (en daN/cm²) | 5 | 8 | 14 | 10 | 12 | 10 |

## Revendications

1. Composition adhésive comprenant :
- de 10 à 95 % poids/poids d'un polymère (A) réticulable à l'humidité dont la chaîne principale comprend 2 groupements terminaux silyl, chacun comprenant au moins un groupe hydrolysable lié à l'atome de silicium ;
- de 1 à 60 % poids/poids d'une charge minérale (B) sous la forme de particules de taille comprise entre 1 nm et 0,2 mm, de préférence entre 10 nm et 0,01 mm ; et
- de 0,2 à 7 % poids/poids d'un catalyseur de réticulation (C) constitué du tétraisopropoxyde de titane.

2. Composition adhésive selon la revendication 1, **caractérisée en ce que** la chaîne principale du polymère (A) est choisie parmi les chaînes polymériques suivantes :
- (A1) les polyoxyalkylènes ;
- (A2) les polyuréthanes ou polyurées obtenus par condensation d'un polyol (notamment de type polyéther et/ou polyester) ou d'une polyamine, avec des polyisocyanates;
- (A3) les homopolymères et copolymères obtenus à partir :
- d'au moins un monomère de type alkyl (méth)acrylate comprenant un radical alkyle ayant un nombre d'atomes de carbone compris entre 1 et 15, de préférence entre 1 et 10 ; et éventuellement
- d'autres monomères, comme les dérivés styréniques, les éthers vinyliques, les acides (méth)acryliques ou d'autres dérivés polyinsaturés, ces autres monomères pouvant être utilisés jusqu'à des teneurs de 50% en poids par rapport à l'ensemble des monomères.

3. Composition adhésive selon l'une des revendications 1 ou 2, **caractérisée en ce que** le groupement silyl est un radical alkoxysilane ayant pour formule :
- Si (R¹)ₚ(OR²)₃₋ₚ (I)
dans laquelle :
- R¹ et R², identiques ou différents, représentent chacun un radical alkyle linéaire ou ramifié de 1 à 4 atomes de carbone, avec la possibilité lorsqu'il y a plusieurs radicaux R¹ ou R² que ceux-ci soient identiques ou différents ;
- p est un nombre entier égal à 0, 1 ou 2.

4. Composition adhésive selon la revendication 3, **caractérisée en ce que**, lorsque la chaîne principale du polymère (A) est (A1), le radical alkoxysilane est relié à celle-ci directement par sa liaison disponible ou bien indirectement par l'intermédiaire d'une fonction uréthane et d'un groupe comprenant un radical alkylène choisi parmi les radicaux de formule :
-CH₂- ou -CH₂-CH₂-CH₂-.

5. Composition adhésive selon l'une des revendications 3 ou 4, **caractérisée en ce que** le radical alkoxysilane est choisi parmi les radicaux de formule suivante :
-Si(OCH₃)₃, -Si(CH₃)(OCH₃)₂, -Si(OCH₂CH₃)₃, -Si(CH₃)(OCH₂CH₃)₂.

6. Composition adhésive selon l'une des revendications 1 à 5, **caractérisée en ce que** le polymère (A) a pour chaîne principale (A1).

7. Composition adhésive selon l'une des revendications 1 à 5, **caractérisée en ce que** le polymère (A) a pour chaîne principale (A2).

8. Composition adhésive selon l'une des revendications 1 à 7, **caractérisée en ce que** la charge minérale est choisie parmi le carbonate de calcium ou une silice pyrogénée.

9. Composition adhésive selon l'une des revendications 1 à 8, **caractérisée en ce qu'**elle comprend de 15 à 80 % du polymère (A), de 2 à 55 % de charge minérale et de 0,5 à 5 % de tétraisopropoxyde de titane (C).

10. Utilisation de la composition adhésive telle que définie dans l'une des revendications 1 à 9 comme colle de réparation ou de fixation.

## Patentansprüche

1. Klebstoffzusammensetzung, umfassend:
- 10 bis 95 Gew.-% eines feuchtigkeitsvernetzbaren Polymers (A), dessen Hauptkette 2 Silyl-Endgruppen umfasst, die jeweils mindestens eine an das Siliciumatom gebundene hydrolysierbare Gruppe umfassen;
- 1 bis 60 Gew.-% eines mineralischen Füllstoffs (B) in Form von Teilchen mit einer Größe zwischen 1 nm und 0,2 mm, vorzugsweise zwischen 10 nm und 0,01 mm; und
- 0, 2 bis 7 Gew.-% eines Vernetzungskatalysators (C), der aus Titantetraisopropoxid besteht.

2. Klebstoffzusammensetzung nach Anspruch 1, **dadurch gekennzeichnet, dass** die Hauptkette des Polymers (A) aus den folgenden Polymerketten ausgewählt ist:
- (A1) Polyoxyalkylenen;
- (A2) Polyurethanen oder Polyharnstoffen, erhalten durch Kondensation eines Polyols (insbesondere vom Polyether- und/oder Polyester-Typ) bzw. eines Polyamins mit Polyisocyanaten;
- (A3) Homopolymeren und Copolymeren, erhalten aus:
- mindestens einem Monomer vom Alkyl(meth)-acrylat-Typ mit einem Alkylrest mit einer Zahl von Kohlenstoffatomen zwischen 1 und 15, vorzugsweise zwischen 1 und 10; und gegebenenfalls
- anderen Monomeren, wie Styrolderivaten, Vinylethern, (Meth)acrylsäuren oder anderen mehrfach ungesättigten Derivaten, wobei diese anderen Monomere in Mengen von bis zu 50 Gew.-%, bezogen auf die Gesamtheit der Monomere, verwendet werden können.

3. Klebstoffzusammensetzung nach einem der Ansprüche 1 oder 2, **dadurch gekennzeichnet, dass** es sich bei der Silylgruppe um einen Alkoxysilanrest der folgenden Formel handelt:
-Si(R¹)ₚ(OR²)₃₋ₚ (I)
worin:
- R¹ und R² gleich oder verschieden sind und jeweils für einen linearen oder verzweigten Alkylrest mit 1 bis 4 Kohlenstoffatomen stehen, wobei dann, wenn mehrere Reste R¹ oder R² vorliegen, diese Reste gleich oder verschieden sein können;
- p für eine ganze Zahl mit einem Wert von 0, 1 oder 2 steht.

4. Klebstoffzusammensetzung nach Anspruch 3, **dadurch gekennzeichnet, dass** dann, wenn es sich bei der Hauptkette des Polymers (A) um (A1) handelt, der Alkoxysilanrest direkt über seine verfügbare Bindung oder indirekt über eine Urethanfunktion und eine Gruppe, die einen Alkylenrest, der aus den Resten der Formel:
-CH₂- oder -CH₂-CH₂-CH₂-
ausgewählt ist, umfasst, an die Hauptkette gebunden ist.

5. Klebstoffzusammensetzung nach einem der Ansprüche 3 oder 4, **dadurch gekennzeichnet, dass** der Alkoxysilanrest aus den Resten der folgenden Formeln ausgewählt ist:
-Si(OCH₃)₃, -Si(CH₃) (OCH₃)₂, -Si(OCH₂CH₃)₃, -Si(CH₃) (OCH₂CH₃)₂.

6. Klebstoffzusammensetzung nach einem der Ansprüche 1 bis 5, **dadurch gekennzeichnet, dass** das Polymer (A) als Hauptkette (A1) aufweist.

7. Klebstoffzusammensetzung nach einem der Ansprüche 1 bis 5, **dadurch gekennzeichnet, dass** das Polymer (A) als Hauptkette (A2) aufweist.

8. Klebstoffzusammensetzung nach einem der Ansprüche 1 bis 7, **dadurch gekennzeichnet, dass** der mineralische Füllstoff aus Calciumcarbonat oder einer pyrogenen Kieselsäure ausgewählt ist.

9. Klebstoffzusammensetzung nach einem der Ansprüche 1 bis 8, **dadurch gekennzeichnet, dass** sie 15 bis 80% Polymer (A), 2 bis 55% mineralischen Füllstoff und 0,5 bis 5% Titantetraisopropoxid (C) umfasst.

10. Verwendung der Klebstoffzusammensetzung gemäß einem der Ansprüche 1 bis 9 als Reparatur- oder Fixierkleber.

## Claims

1. Adhesive composition comprising:
- from 10% to 95% weight/weight of a moisture-crosslinkable polymer (A) with a main chain comprising 2 terminal silyl groups each comprising at least one hydrolyzable group bonded to the silicon atom;
- from 1% to 60% weight/weight of a mineral filler (B) in the form of particles with a size of between 1 nm and 0.2 mm, preferably between 10 nm and 0.01 mm; and
- from 0.2% to 7% weight/weight of a crosslinking catalyst (C) composed of titanium tetraisopropoxide.

2. Adhesive composition according to Claim 1, **characterized in that** the main chain of the polymer (A) is selected from the following polymer chains:
- (A1) polyoxyalkylenes;
- (A2) polyurethanes or polyureas obtained by condensing a polyol (particularly a polyether and/or polyester polyol) or a polyamine with polyisocyanates;
- (A3) homopolymers and copolymers obtained from:
- at least one alkyl (meth)acrylate monomer comprising an alkyl radical having a number of carbon atoms of between 1 and 15, preferably between 1 and 10; and optionally
- other monomers, such as styrene derivatives, vinyl ethers, (meth)acrylic acids or other polyunsaturated derivatives, it being possible for these other monomers to be used in amounts of up to 50% by weight relative to the entirety of the monomers.

3. Adhesive composition according to either of Claims 1 and 2, **characterized in that** the silyl group is an alkoxysilane radical having the formula:
-Si(R¹)ₚ(OR²)₃₋ₚ (I)
in which:
- R¹ and R², which are identical or different, each represent a linear or branched alkyl radical of 1 to 4 carbon atoms, with the possibility, when there are two or more radicals R¹ or R², for them to be identical or different;
- p is an integer equal to 0, 1 or 2.

4. Adhesive composition according to Claim 3, **characterized in that** when the main chain of the polymer (A) is (A1), the alkoxysilane radical is joined to said chain directly by its available bond or else indirectly via a urethane function and a group comprising an alkylene radical selected from the radicals of formula:
-CH₂- or -CH₂-CH₂-CH₂-.

5. Adhesive composition according to either of Claims 3 and 4, **characterized in that** the alkoxysilane radical is selected from the radicals of the following formulae:
-Si(OCH₃)₃, -Si(CH₃) (OCH₃)₂, -Si(OCH₂CH₃)₃, -Si(CH₃) (OCH₂CH₃)₂.

6. Adhesive composition according to any of Claims 1 to 5, **characterized in that** the main chain of the polymer (A) is (A1).

7. Adhesive composition according to any of Claims 1 to 5, **characterized in that** the main chain of the polymer (A) is (A2).

8. Adhesive composition according to any of Claims 1 to 7, **characterized in that** the mineral filler is selected from calcium carbonate or a fumed silica.

9. Adhesive composition according to any of Claims 1 to 8, **characterized in that** it comprises from 15% to 80% of the polymer (A), from 2% to 55% of mineral filler, and from 0.5% to 5% of titanium tetraisopropoxide (C).

10. Use of the adhesive composition as defined in any of Claims 1 to 9 as a fixing or repair glue.
